# FASCICULE DE BREVET EUROPEEN

(11) **EP 3 724 050 B1**
(45) Date de publication et mention de la délivrance du brevet: **20.07.2022**
(21) Numéro de dépôt: 18833095.5
(22) Date de dépôt: 11.12.2018
(51) Int. Cl.: B60T 15/02

(54) **SYSTÈME DE FREINAGE POUR VÉHICULE FERROVIAIRE**
BREMSSYSTEM FÜR SCHIENENFAHRZEUG
BRAKING SYSTEM FOR RAILWAY VEHICLE

(30) Priorité: 15.12.2017 FR 1762249
(43) Date de publication de la demande: 21.10.2020
(73) Titulaire: Faiveley Transport Amiens, 80000 Amiens (FR)
(72) Inventeur: LAGORS, Frédéric, 38200 SERPAIZE (FR); NEGRELLO, Quentin, 89230 VILLENEUVE SAINT SALVES (FR); CROSNIER, Guillaume, 80170 ROSIERES EN SANTERRE (FR)
(74) Mandataire: Santarelli
(86) Numéro de dépôt international: PCT/FR2018/053180
(87) Numéro de publication internationale: WO 2019/115925

(56) Documents cités:
- DE-U1- 9 114 043

## Description

### DOMAINE DE L'INVENTION

L'invention concerne le domaine du freinage des véhicules ferroviaires et plus particulièrement les systèmes de freinage ferroviaires pour véhicule ferroviaire, pourvus d'un frein de service et/ou de parking configuré pour être alimenté par une source d'agent de pression de sorte à agir sur des organes de freinage, et d'un dispositif de régulation de pression dudit agent de pression.

### ARRIERE PLAN TECHNOLOGIQUE

Les véhicules ferroviaires sont généralement équipés d'étriers de frein de service et/ou de parking pourvus d'un cylindre de frein de service et/ou de parking.

Ce cylindre comporte un piston de freinage mobile d'une part, sous l'effet de l'action d'un ou plusieurs ressorts et d'autre part, sous l'effet d'un fluide sous pression.

Généralement, le déplacement du piston de freinage sous l'effet des ressorts entraîne une action de freinage telle que le serrage d'un disque de frein entre deux garnitures, ou la pression directe d'une semelle contre une roue du véhicule. Au contraire, le déplacement du piston de freinage sous l'effet du fluide sous pression entraîne une action inverse au freinage, à savoir le desserrage du disque de frein ou le retrait de la semelle ; et permet ainsi le retrait du frein.

Plus précisément, ce type de cylindre de freinage peut comporter un corps dans lequel et par rapport auquel le piston de freinage est mobile pour agir sur les garnitures ou sur la semelle par l'intermédiaire d'une tige de poussée et d'une timonerie de freinage, et une cavité ménagée dans le corps et prévue pour recevoir les ressorts.

Le cylindre de frein peut comporter en outre une chambre de pression délimitée notamment par le piston de freinage et par le corps, et qui est raccordée par une conduite à une source d'agent de pression pour ramener le piston dans une position de repos où le frein est armé mais non appliqué.

En particulier, selon le fonctionnement ci-dessus, pour armer le frein, la chambre de pression est alimentée en agent de pression, aussi appelé fluide sous pression, via la source correspondante de sorte à déplacer le piston de freinage dans le corps. Le déplacement du piston de freinage vers sa position de repos entraîne le déplacement d'un flasque d'appui à l'encontre de la force du ressort, qui se comprime.

Pour ce faire, les véhicules ferroviaires sont aussi équipés d'un ou de plusieurs réservoirs formant la source, remplis du fluide maintenu sous pression par exemple par un groupe motopompe, et d'au moins un dispositif de régulation de la pression du fluide, qui est interconnecté sur la conduite entre le réservoir et le cylindre de frein.

### OBJET DE L'INVENTION

L'invention concerne un système de freinage pour véhicule ferroviaire du type décrit ci-dessus.

L'invention a ainsi pour objet, selon un premier aspect, un système de freinage ferroviaire pour véhicule ferroviaire à organes de freinage à au moins une garniture ou à au moins une semelle, comportant un dispositif de freinage pourvu d'un cylindre et d'un piston mobile par rapport audit cylindre pour agir sur lesdits organes de freinage, une source d'agent de pression configurée pour alimenter ledit dispositif de freinage en agent de pression et mettre en mouvement ledit piston, et un dispositif de régulation disposé entre ladite source et ledit dispositif de freinage et configuré pour contrôler à une valeur prédéterminée la valeur de pression dudit agent de pression cheminant entre ledit dispositif de régulation et ledit dispositif de freinage ;
ledit système de freinage ferroviaire étant caractérisé en ce que ledit dispositif de régulation comporte une vanne de régulation pourvue d'un corps ayant une cavité principale longitudinale et, débouchant dans ladite cavité principale, une gorge d'alimentation, une gorge de vidange et une gorge de régulation située entre lesdites gorges d'alimentation et de vidange ; et d'un tiroir ayant une gorge d'alimentation, une gorge de vidange et une gorge de régulation située entre lesdites gorges d'alimentation et de vidange ; et d'un tiroir ayant une chambre interne et, débouchant dans ladite chambre interne, au moins une encoche d'alimentation, au moins une encoche de vidange et au moins une encoche de régulation située entre lesdites encoches d'alimentation et de vidange ; lesdites encoches d'alimentation et de vidange dudit tiroir présentant chacun une section globale de passage dudit agent de pression ayant une forme présentant sensiblement au moins un sommet ;
ledit tiroir étant monté mobile dans ladite cavité principale dudit corps, entre une position d'alimentation où ladite au moins une encoche d'alimentation est en regard de ladite gorge d'alimentation dudit corps, et une position de vidange où ladite au moins une encoche de vidange est en regard de ladite gorge de vidange dudit corps ;
ledit dispositif de régulation étant configuré pour admettre une configuration de régulation sensiblement stable, dans laquelle ladite valeur de pression dudit agent de pression cheminant entre ledit dispositif de régulation et ledit dispositif de freinage est limitée à ladite valeur prédéterminée, et dans laquelle ledit tiroir est positionné dans ladite cavité principale dudit corps de sorte que ladite au moins une encoche de régulation est en regard de ladite gorge de régulation dudit corps tandis que lesdites encoches d'alimentation et de vidange sont à distances respectivement desdites gorges d'alimentation et de vidange dudit corps.

Dans le système de freinage selon l'invention, l'agent de pression circule dans la chambre interne et dans les encoches du tiroir de la vanne et aussi dans les gorges du corps de la vanne. La combinaison d'un tel agencement avec, d'une part, des encoches d'alimentation et de vidange dont la section globale de passage de l'agent de pression a une forme présentant sensiblement au moins un sommet et, d'autre part, des encoches d'alimentation et de vidange qui sont fermées (c'est-à-dire qui ne sont pas en regard respectivement des gorges d'alimentation et de vidange) lorsque la ou les encoches de régulation sont ouvertes (c'est-à-dire en regard de la gorge de régulation), permet à la fois de limiter substantiellement les éventuelles fuites d'agent de pression dans la vanne de régulation et de fournir une régulation particulièrement précise, au regard d'une valeur limite prédéterminée de pression de l'agent de pression.

On notera que la précision de la régulation peut se définir et s'apprécier notamment par un temps de réponse satisfaisant de la vanne au regard de l'application à un système de freinage ferroviaire, et en particulier par une stabilité de la régulation sur toute la plage de pression utile, c'est-à-dire depuis zéro (non inclus) jusqu'à la valeur limite prédéterminée.

On notera qu'une telle stabilité est particulièrement avantageuse pour faire fonctionner par exemple une fonction d'anti-patinage des roues du véhicule ferroviaire.

Le système selon l'invention permet par conséquent d'obtenir une régulation de pression particulièrement performante, de manière simple, commode et économique.

Selon des caractéristiques préférées, simples, commodes et économiques du système selon l'invention :
- ledit tiroir présente une forme globalement cylindrique et est pourvu de deux dites encoches d'alimentation débouchant en regard l'une de l'autre, de deux dites encoches de vidange débouchant en regard l'une de l'autre et d'au moins deux dites encoches de régulation débouchant en regard l'une de l'autre ; avec au moins lesdites encoches d'alimentation et/ou lesdites encoches de vidange qui présentent une section de passage sensiblement triangulaire ;
- ledit tiroir s'étend globalement longitudinalement et présente, à une première extrémité, un premier puits rejoignant ladite chambre interne, ainsi qu'un premier bouchon d'obturation assujetti mécaniquement et de manière étanche dans ledit premier puits ;
- ledit premier bouchon d'obturation comporte une cavité externe ménagée à l'opposé dudit premier puits et configurée pour recevoir un doigt de poussée prévu pour déplacer ledit tiroir dans ladite cavité principale dudit corps ;
- ledit tiroir s'étend globalement longitudinalement et présente, à une deuxième extrémité, un deuxième puits rejoignant ladite chambre interne, ainsi qu'un deuxième bouchon d'obturation assujetti mécaniquement et de manière étanche dans ledit deuxième puits ;
- ledit deuxième bouchon d'obturation est configuré pour coopérer avec un mécanisme d'amortissement dudit tiroir, monté dans ladite cavité principale dudit corps ;
- ledit deuxième bouchon d'obturation comporte un trou ménagé à l'opposé dudit deuxième puits et ledit mécanisme d'amortissement comporte une tige réductrice au moins partiellement introduite dans ledit trou, une chemise d'amortissement en appui contre ladite tige réductrice et un organe élastique de rappel interposé entre ladite chemise d'amortissement et ledit deuxième bouchon d'obturation ;
- ladite cavité principale longitudinale ménagée dans ledit corps de ladite vanne de régulation débouche de part et d'autre dudit corps ;
- ledit corps de ladite vanne de régulation est pourvu d'un conduit d'alimentation débouchant sur un premier côté dudit corps et dans ladite gorge d'alimentation, d'un conduit de vidange débouchant sur ledit premier côté dudit corps et dans ladite gorge de vidange, et d'un conduit de régulation débouchant sur ledit premier côté dudit corps et dans ladite gorge de régulation ;
- ledit dispositif de régulation comporte une centrale formant une interface fluidique entre ladite vanne de régulation, ledit dispositif de freinage et ladite source d'agent de pression ; ledit corps de ladite vanne de régulation présente un premier côté par lequel est montée ladite vanne de régulation sur ladite centrale et plusieurs ouvertures sont formées sur ledit premier côté pour permettre une communication fluidique entre ladite vanne de régulation et ladite centrale ;
- ledit dispositif de régulation comporte un actionneur configuré pour déplacer ledit tiroir dans ladite cavité principale dudit corps en fonction d'une consigne de commande ; ledit corps de ladite vanne de régulation présente un deuxième côté par lequel est montée ladite vanne de régulation sur ledit actionneur et au moins une ouverture est formée sur ledit deuxième côté pour permettre le déplacement dudit tiroir dans ladite cavité principale dudit corps ;
- ledit dispositif de régulation comporte un actionneur électrique linéaire à bobine mobile, configuré pour recevoir une consigne électrique de commande et pourvu d'un doigt de poussée venant au contact dudit tiroir pour le déplacement de ce dernier dans ladite cavité principale dudit corps ; et/ou
- ledit agent de pression est un fluide hydraulique.

L'invention a aussi pour objet, selon un second aspect, un dispositif de régulation d'un agent de pression configuré pour contrôler à une valeur prédéterminée la valeur de pression dudit agent de pression, caractérisé en ce qu'il comporte une vanne de régulation pourvue d'un corps ayant une cavité principale longitudinale et, débouchant dans ladite cavité principale, une gorge d'alimentation, une gorge de vidange et une gorge de régulation située entre lesdites gorges d'alimentation et de vidange ; et d'un tiroir ayant une chambre interne et, débouchant dans ladite chambre interne, au moins une encoche d'alimentation, au moins une encoche de vidange et au moins une encoche de régulation située entre lesdites encoches d'alimentation et de vidange ;
lesdites encoches d'alimentation et de vidange dudit tiroir présentant chacun une section globale de passage dudit agent de pression ayant une forme présentant sensiblement au moins un sommet ;
ledit tiroir étant monté mobile dans ladite cavité principale dudit corps, entre une position d'alimentation où ladite au moins une encoche d'alimentation est en regard de ladite gorge d'alimentation dudit corps, et une position de vidange où ladite au moins une encoche de vidange est en regard de ladite gorge de vidange dudit corps ;
ledit dispositif de régulation étant configuré pour admettre une configuration de régulation sensiblement stable, dans laquelle ladite valeur de pression dudit agent de pression est limitée à ladite valeur prédéterminée, et dans laquelle ledit tiroir est positionné dans ladite cavité principale dudit corps de sorte que ladite au moins une encoche de régulation est en regard de ladite gorge de régulation dudit corps tandis que lesdites encoches d'alimentation et de vidange sont à distances respectivement desdites gorges d'alimentation et de vidange dudit corps.

Selon des caractéristiques préférées, simples, commodes et économiques du dispositif selon l'invention, ledit tiroir s'étend globalement longitudinalement et présente, à une première extrémité, un premier puits rejoignant ladite chambre interne, ainsi qu'un premier bouchon d'obturation assujetti mécaniquement et de manière étanche dans ledit premier puits, avec ledit premier bouchon d'obturation qui comporte une cavité externe ménagée à l'opposé dudit premier puits et configurée pour recevoir un doigt de poussée prévu pour déplacer ledit tiroir dans ladite cavité principale dudit corps ; et à une deuxième extrémité, un deuxième puits rejoignant ladite chambre interne, ainsi qu'un deuxième bouchon d'obturation assujetti mécaniquement et de manière étanche dans ledit deuxième puits, avec ledit deuxième bouchon d'obturation qui comporte un trou ménagé à l'opposé dudit deuxième puits et qui est configuré pour coopérer avec un mécanisme d'amortissement dudit tiroir, monté dans ladite cavité principale dudit corps, lequel mécanisme d'amortissement comporte une tige réductrice au moins partiellement introduite dans ledit trou, une chemise d'amortissement en appui contre ladite tige réductrice et un organe élastique de rappel interposé entre ladite chemise d'amortissement et ledit deuxième bouchon d'obturation.

### BREVE DESCRIPTION DES DESSINS

On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement et partiellement un système de freinage ferroviaire comportant notamment un frein de service monté sur un disque associé à une roue de véhicule ferroviaire, une source d'agent de pression et un dispositif de régulation de la pression dudit agent de pression ;
- la figure 2 représente schématiquement et partiellement le dispositif de régulation de la pression dudit agent de pression de la figure 1, pourvu notamment d'une centrale, d'une vanne de régulation, aussi appelée réducteur, montée sur la centrale, et d'un actionneur monté sur la vanne ;
- les figures 3 et 4 illustrent respectivement en plan et en perspective la vanne de régulation et l'actionneur, pris isolément et de manière assemblée ;
- la figure 5 est une vue en coupe médiane longitudinale de la vanne de distribution, sans l'actionneur ;
- les figures 6 et 7 sont des vues similaires à celle de la figure 4, mais prises selon différents angles de vue et montrant en transparence et schématiquement par des traits pointillés des conduits ménagés dans le corps de vanne et raccordant le tiroir de régulation, montré aussi schématiquement, à des orifices ménagés également dans le corps de vanne ;
- la figure 8 est une vue en perspective de la vanne de régulation et de l'actionneur, pris isolément et de manière désassemblée ;
- la figure 9 est une vue en perspective isolée de l'actionneur ;
- les figures 10 et 11 illustrent en perspective et de manière isolée, un corps de la vanne de régulation, pris selon différents angles de vue ;
- la figure 12 représente en perspective éclatée différents composant de la vanne, configurés pour être montés à l'intérieur du corps de vanne illustré ;
- les figures 13 et 14 illustrent respectivement en plan et en coupe repérée A-A sur la figure 13, un des composants visibles sur la figure 12, à savoir un tiroir de régulation ;
- la figure 15 illustre les différents composants visibles sur la figure 12, dans un état assemblé et selon une coupe médiane longitudinale ; et
- les figures 16 à 18 illustrent, en perspective et selon différents angles de vue, l'assemblage des différents composants de la vanne dans et sur le corps de vanne.

### DESCRIPTION DETAILLEE D'UN EXEMPLE DE REALISATION

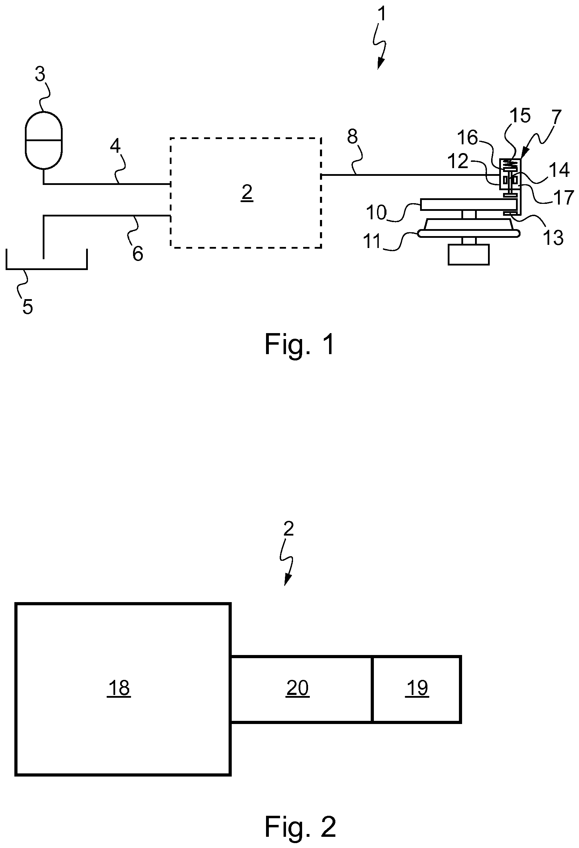

Les figures 1 et 2 représentent schématiquement et partiellement un système de freinage ferroviaire 1 pour un véhicule ferroviaire (non représenté), et un dispositif de régulation 2 d'un agent de pression que le système 1 comporte.

Le système 1 comporte en outre une source d'agent de pression, ici formé par un accumulateur 3, raccordé au dispositif de régulation 2 par une première conduite 4, une cuve de récupération 5 raccordée aussi au dispositif de régulation 2 par une deuxième conduite 6, et un étrier de frein de service 7 raccordé également au dispositif de régulation 2 par une troisième conduite 8.

L'étrier de frein de service 7 est ici monté sur un disque 10 associé à une roue 11 du véhicule ferroviaire.

L'étrier de frein de service 7 (ici représenté très schématiquement) est pourvu d'un corps 12 formant un cylindre de frein de service, des garnitures de freinage 13 reliées mécaniquement au corps 12 via une timonerie de freinage et configurées pour agir sur le disque 10.

Le corps 12 présente généralement la forme d'une enveloppe globalement fermée. Le frein de service comporte un actionneur qui est ici formé par un piston de freinage 14 logé dans une première cavité ménagée dans le corps 12. Ce piston de freinage 14 est mobile par rapport au corps 12, dans la première cavité, selon une première direction axiale.

Le frein de service est en outre pourvu d'un organe ressort 15 logé dans une deuxième cavité ménagée dans le corps 12 et d'un flasque d'appui 16 assujetti mécaniquement à la fois à l'organe ressort 15 et au piston de freinage 14.

L'organe ressort 15 peut être formé par un ou plusieurs ressorts de compression et le flasque d'appui 16 peut présenter la forme par exemple d'une coupe dans laquelle se loge au moins partiellement l'organe ressort 15.

Le flasque d'appui 16 est assujetti mécaniquement à une extrémité du piston de freinage 14 par l'intermédiaire d'une interface de liaison mécanique.

L'organe ressort 15 est ici configuré pour mettre, sans sollicitation extérieure et par l'intermédiaire du flasque d'appui 16 et de l'interface, le piston de freinage 14 dans une position de freinage dans laquelle les garnitures de freinage 13 appliquent un effort sur le disque 10, grâce à quoi le frein est appliqué.

Le piston de freinage 14 délimite avec le corps 12 une chambre de pression 17 configurée pour être alimentée par la troisième conduite 8.

L'alimentation de la chambre de pression 17 en agent de pression sous une pression prédéterminée permet ici de mettre le piston de freinage 14 dans une position distincte de la position de freinage, dans laquelle les garnitures n'appliquent aucun effort sur le disque, grâce à quoi le frein n'est pas appliqué.

L'agent de pression est ici un fluide hydraulique pressurisé dans l'accumulateur 3 à une valeur de pression comprise par exemple entre environ 110 bars et environ 150 bars.

Le système 1 comporte un groupe motopompe (non illustré) configuré pour maintenir le fluide hydraulique à une valeur de pression prédéterminée, par exemple ici environ 145 bars, dans l'accumulateur 3.

L'alimentation de l'étrier de frein de service 7 en fluide hydraulique se fait depuis l'accumulateur 3 via le dispositif de régulation de pression 2.

Le dispositif de régulation 2, ainsi qu'illustré schématiquement sur la figure 2, comporte une centrale 18, une vanne de régulation 20, aussi appelée réducteur de pression, montée sur la centrale 18, et un actionneur 19 monté sur la vanne 20.

Le dispositif de régulation 2 est configuré pour réguler et contrôler la valeur de pression du fluide hydraulique provenant de l'accumulateur 3, ici à une valeur d'utilisation égale à environ 110 bars, notamment pour son acheminement vers l'étrier de frein de service jusqu'à sa chambre de pression 17 ; et/ou depuis cette chambre 17 vers la cuve de récupération 5.

La centrale 18 peut être formée d'un corps formant une interface fluidique dans laquelle sont notamment ménagés des conduits pour l'interconnexion fluidique des première, deuxième et troisième conduites 4, 6 et 8 avec des orifices dédiés de la vanne 20 (voir ci-après).

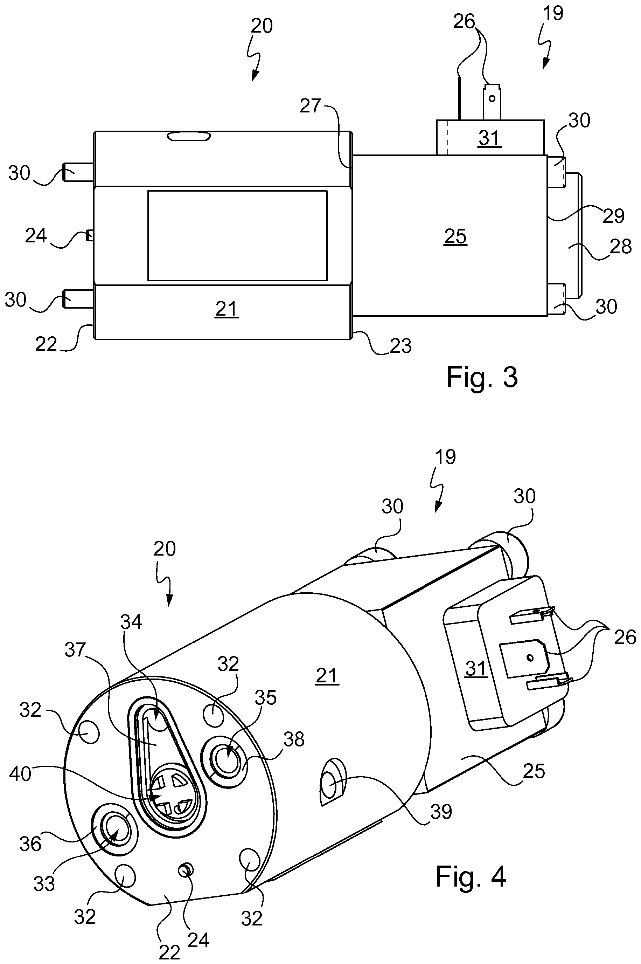

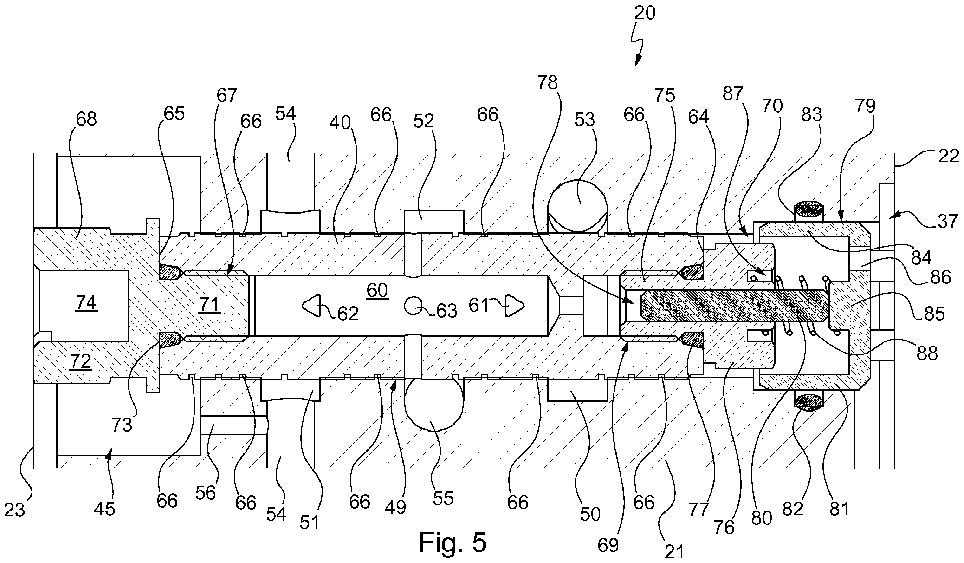

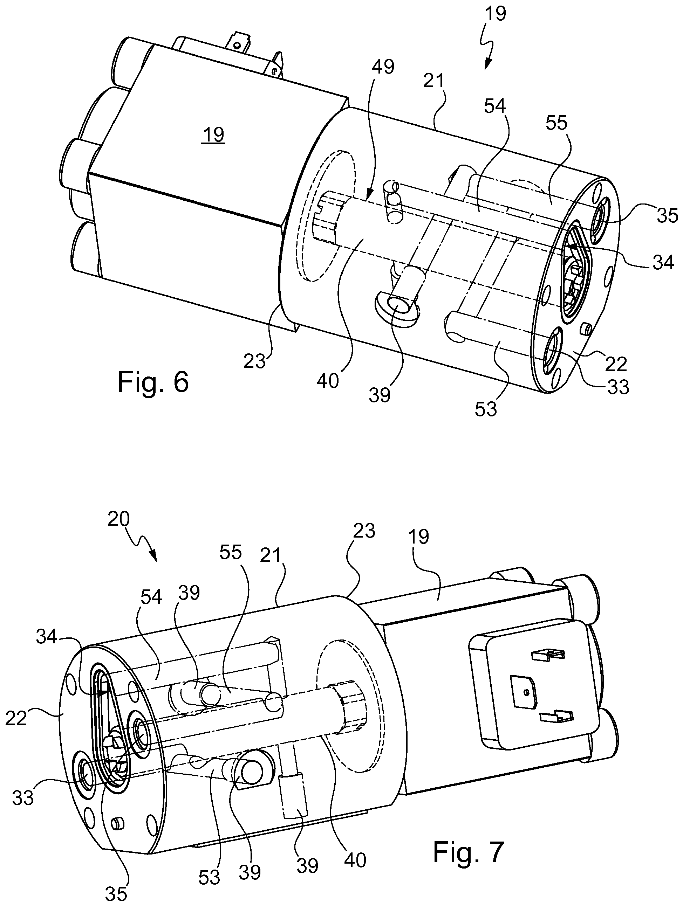

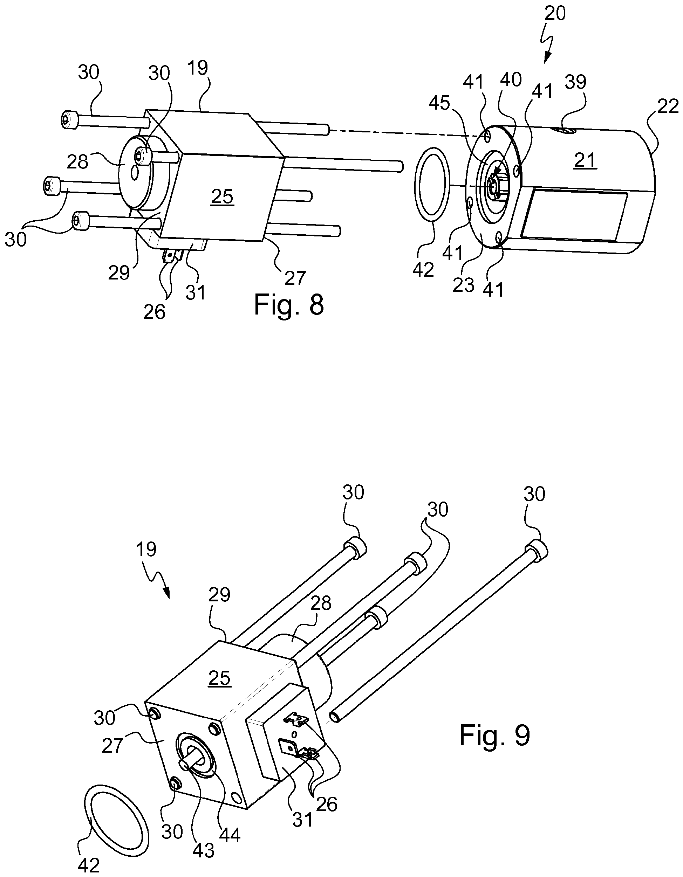

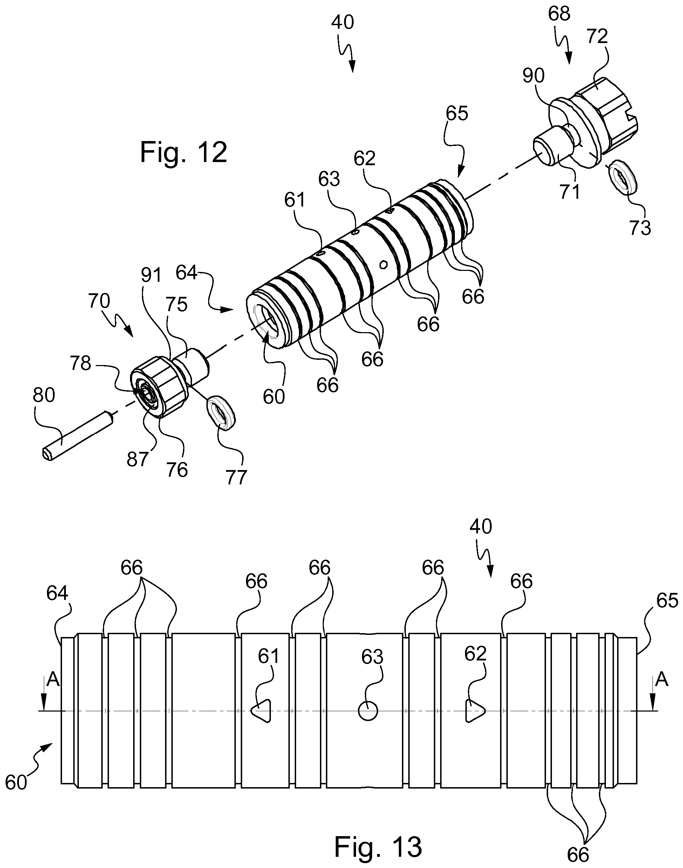

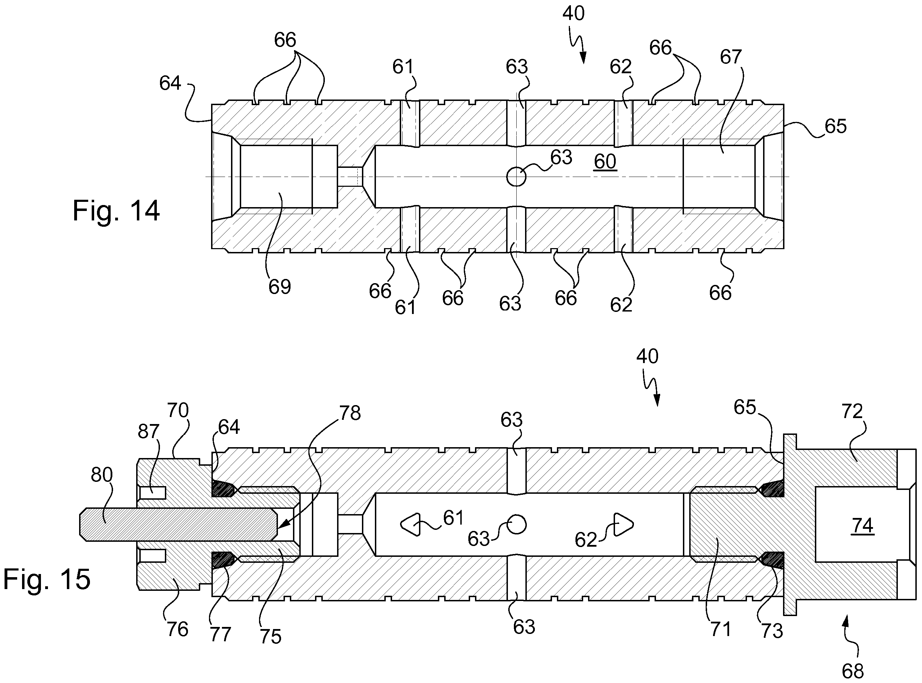

On va maintenant décrire en détail la vanne 20 et l'actionneur 19, en particulier en référence aux figures 3 à 15.

La vanne de régulation 20 comporte un corps 21 ayant une forme globalement cylindrique et s'étendant sensiblement longitudinalement, et un tiroir de régulation 40 introduit dans le corps 21.

Le corps 21 présente un premier côté 22 par lequel est montée cette vanne de régulation 20 sur la centrale 18.

La vanne 20 comporte un pion de détrompage 24 saillant du premier côté 22 pour son montage sur la centrale.

Le corps 21 de vanne 20 présente un deuxième côté 23, opposé au premier côté 22, par lequel est montée cette vanne 20 sur l'actionneur 19 (voir ci-après).

Le corps 21 de vanne 20 présente une cavité principale longitudinale 49 prévue pour recevoir le tiroir de régulation 40 et qui débouche à la fois du premier côté 22 et du deuxième côté 23 du corps 21, formant ainsi des ouvertures de part et d'autre du corps 21.

Le corps 21 de vanne 20 comporte plusieurs ouvertures formées sur son premier côté 22 pour permettre une communication fluidique entre la vanne de régulation 20 et la centrale 18.

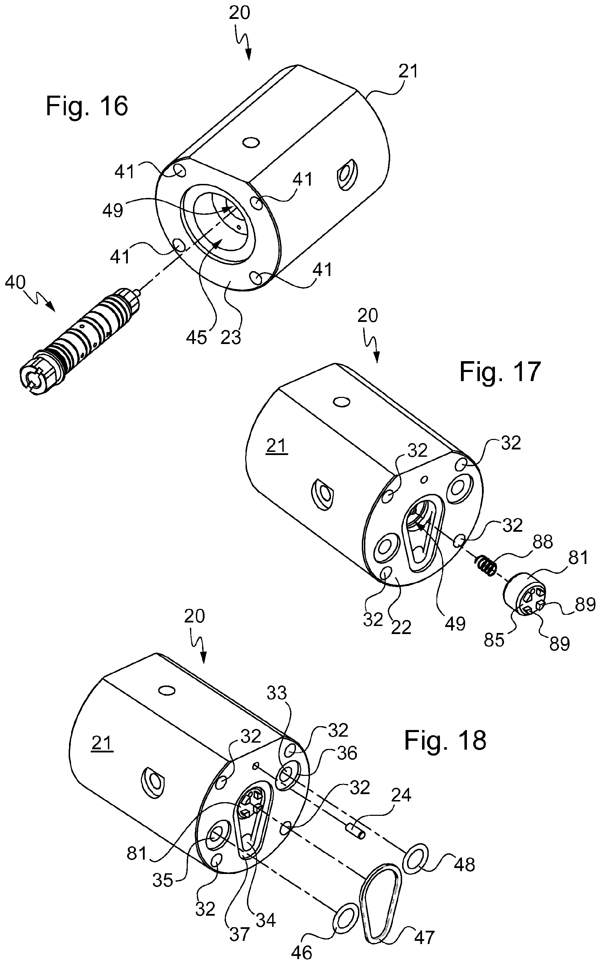

Il s'agit en particulier d'une ouverture d'alimentation 33 autour de laquelle est formée une gorge d'étanchéité 36 prévue pour accueillir un joint torique 48, une ouverture de régulation 35 autour de laquelle est formée une gorge d'étanchéité 38 prévue pour accueillir un joint torique 46, et une ouverture de vidange 33 autour de laquelle est formée une chambre d'étanchéité 37 entourée d'un joint torique 47 (les joints 46, 47 et 48 sont représentés sur la figure 18).

Le corps 21 de vanne 20 comporte en outre des alésages traversant et débouchant au niveau de trous 32 sur son premier côté 22 et de trous 41 sur son deuxième côté 23.

Le corps 21 de vanne 20 est aussi pourvu d'une gorge d'alimentation 50, d'une gorge de vidange 51 et d'une gorge de régulation 52 située entre les gorges d'alimentation et de vidange 50 et 51.

Ces gorges 50 à 52 sont ici au moins partiellement annulaires et débouchent chacune dans la cavité principale 49.

Le corps 21 de vanne 20 est en outre pourvu d'un conduit d'alimentation 53 débouchant, à une extrémité, sur le premier côté 22 par l'ouverture d'alimentation 33 et, à une extrémité opposée, dans la gorge d'alimentation 50, d'un conduit de vidange 54 débouchant, à une extrémité, sur le premier côté 22 par l'ouverture de vidange 34 et, à une extrémité opposée, dans la gorge de vidange 51, et d'un conduit de régulation 55 débouchant, à une extrémité, sur le premier côté 22 par l'ouverture de régulation 35 et, à une extrémité opposée, dans la gorge de régulation 52.

Les conduits d'alimentation, de vidange et de régulation 53, 54 et 55 sont réalisés dans le corps par différents perçages qui forment des orifices qui sont ici bouchés par des bouchons 39 dits « expendeur » en terminologie anglo-saxonne, introduits à force et de manière étanche dans le corps 21 de vanne 20.

Le corps 21 de vanne 20 comporte une gorge annulaire formant une première chambre 45 ménagée sur son deuxième côté 23, entourée d'un joint torique 42, et dans laquelle est au moins partiellement reçu le tiroir 40.

Le corps 21 de vanne 20 comporte en outre un premier gicleur 56 débouchant, à une extrémité, dans la première chambre 45 et, à une extrémité opposée, dans le conduit de vidange 54.

Le tiroir de régulation 40 présente une forme globalement cylindrique dans laquelle est ménagée une chambre interne 60.

Le tiroir de régulation 40 comporte ici deux encoches d'alimentation 61, deux encoches de vidange 62 et quatre encoches de régulation 63 situées entre les encoches d'alimentation et de vidange 61 et 62.

Les encoches d'alimentation et de vidange 61 et 62 présentent chacune une section globale de passage du fluide hydraulique ayant une forme présentant sensiblement au moins un sommet.

Le sommet des encoches de vidange 62 est globalement dirigé vers une première extrémité 65 du tiroir 40 ; tandis que le sommet des encoches d'alimentation 61 est globalement dirigé vers une deuxième extrémité 64 du tiroir 40, opposée à sa première extrémité 65.

En particulier ici, les encoches d'alimentation et de vidange 61 et 62 sont en forme de triangle et présentent donc chacune trois sommets.

Les encoches de régulation 63 présentent quant à elles chacune une section globale de passage du fluide hydraulique ayant une forme circulaire, et sont en particulier ici en forme de cercle.

Les deux encoches d'alimentation 61 débouchent en regard l'une de l'autre dans la chambre interne 60, les deux encoches de vidange 62 débouchent en regard l'une de l'autre dans la chambre interne 60, et les quatre encoches de régulation débouchent, deux à deux, en regard l'une de l'autre dans la chambre interne 60.

Les encoches 61, 62 et 63 traversent radialement le tiroir 40 et débouchent donc toutes dans la chambre interne 60.

Le tiroir 40 est en outre pourvu, sur son contour externe, d'une pluralité de rainures annulaires 66 reparties sur la longueur du tiroir 40.

On notera que le tiroir 40 est monté mobile dans la cavité principale 49 du corps 21 de vanne 20 avec un jeu par exemple compris entre environ 6 microns et environ 8 microns entre le contour externe du tiroir 40 et le corps 21 de vanne 20.

Le tiroir de régulation 40 présente en outre, à sa première extrémité 65, un premier puits 67 rejoignant la chambre interne 60, ainsi qu'un premier bouchon d'obturation 68 assujetti mécaniquement et de manière étanche dans le premier puits 64.

Le tiroir de régulation 40 présente également, à sa deuxième extrémité 64, un deuxième puits 69 rejoignant sensiblement la chambre interne 60 à l'opposé du premier puits 67, ainsi qu'un deuxième bouchon d'obturation 70 assujetti mécaniquement et de manière étanche dans le deuxième puits 69.

Les premier et deuxième puits 67 et 69 sont chacun pourvus de parois filetées et les premier et deuxième bouchons d'obturation 68 et 70 sont ici vissés dans les premier et deuxième puits respectifs 67 et 69.

Le premier bouchon d'obturation 68 est pourvue d'une base filetée 71 introduite fixement dans le premier puits 67, d'une tête 72 saillant de la base 71 et d'un logement 90 ménagé entre la tête 72 et la base 71 et dans lequel est logé un joint torique 73 pour étancher le montage du premier bouchon d'obturation 68 dans le premier puits 67 du tiroir 40.

Le premier bouchon d'obturation 68 comporte une cavité externe 74 ménagée dans la tête 72 à l'opposé de la base 71 et du premier puits 67 et configurée pour recevoir un doigt de poussée 43 de l'actionneur 19 prévu pour déplacer le tiroir 40 dans la cavité principale 49 du corps 21 de vanne 20.

Le deuxième bouchon d'obturation 70 est pourvu d'une base filetée 75 introduite fixement dans le deuxième puits 69, d'une tête 76 saillant de la base 75 et d'un logement 91 ménagé entre la tête 76 et la base 75 et dans lequel est logé un joint torique 77 pour étancher le montage du deuxième bouchon d'obturation 70 dans le deuxième puits 69 du tiroir 40.

Le deuxième bouchon d'obturation 70 comporte un trou traversant 78 ménagé dans la tête 76 et dans la base 75, jusqu'à déboucher dans le deuxième puits 69.

Le tiroir 40 est en outre pourvu d'un mécanisme d'amortissement 79 monté dans la cavité principale 49 du corps 21 de vanne 20 et configuré pour coopérer avec le deuxième bouchon d'obturation 70.

Le mécanisme d'amortissement 79 comporte une tige réductrice 80 au moins partiellement introduite dans le trou traversant 78.

Le mécanisme d'amortissement 79 comporte en outre une chemise d'amortissement 81 formant un capot inséré sensiblement à force dans la cavité principale 49 du corps 21 de vanne 20, avec un joint torique 82 qui est logé dans une gorge 83 ménagée dans le corps 21 et qui est interposé entre ce dernier et une paroi latérale 84 de la chemise d'amortissement 81 pour étancher le montage de cette dernière dans le corps 21 de vanne 20.

La chemise d'amortissement 81 comporte une paroi de fond 85 de laquelle saille la paroi latérale 84 et sur laquelle vient en appui une extrémité de la tige réductrice 80.

La chemise d'amortissement 81 comporte en outre un évent 86 ménagé dans la paroi de fond 85.

Le mécanisme d'amortissement 79 comporte également un organe élastique de rappel 88, ici formé par un ressort de compression, interposé entre la paroi de fond 85 de la chemise d'amortissement 81 et le deuxième bouchon d'obturation 70.

Le deuxième bouchon d'obturation 70 est pourvu d'un logement 87 ménagé dans sa base 76 à l'opposé de sa tête 75 et du deuxième puits 69, et qui accueille et guide partiellement le ressort 88.

La chemise d'amortissement 81 comporte en outre des plots d'écartement 89 saillant de sa paroi de fond 85, à l'opposé du deuxième bouchon d'obturation 70.

L'actionneur 19 est un ici actionneur électrique linéaire à bobine mobile.

L'actionneur 19 comporte un boîtier 25 globalement parallélépipédique présentant un premier côté 27 venant en appui contre le deuxième côté 23 du corps 21 de la vanne 20 pour leur assemblage, ainsi qu'un deuxième côté 29, opposé au premier côté 27.

L'actionneur 19 comporte ici des alésages (non représentés) traversant longitudinalement le boîtier 25, et des vis de fixation 30 introduites dans ces alésages depuis le deuxième côté 29 jusqu'à déboucher par son premier côté 27.

Les vis de fixation 30, dont seulement les têtes sont visibles sur les figures 3, 4, 6 et 7 présentent une longueur de tige prédéterminée.

Les tiges des vis 30 peuvent être adaptées à traverser le corps 21 de la vanne 20 depuis son deuxième côté 23, par des trous 41 jusqu'à déboucher par son premier côté 22, au travers de trous 32.

Ainsi, les vis de fixation 30 peuvent permettre de fixer l'ensemble actionneur 19 et vanne 20 sur la centrale 18.

L'actionneur 19 est pourvu d'une embase de raccordement électrique 31 fixée sur une paroi principale du boitier qui s'étend entre ses premier et deuxième côtés 27 et 29, et des pattes de connexions électriques 26 qui saillent de l'embase 31.

L'actionneur 19 comporte une bobine électrique logée principalement dans le boîtier 25 et dans une protubérance 28 saillant du boîtier 25 par son deuxième côté 29.

L'actionneur 19 comporte en outre un doigt de poussée 43 assujetti mécaniquement à la bobine et saillant du boîtier 25 par son premier côté 27.

La bobine de l'actionneur est configurée pour recevoir une consigne électrique de commande par l'intermédiaire des pattes de connexion 26 et mettre en mouvement le doigt de poussée 43 pour déplacer le tiroir 40 dans la cavité principale du corps 21 de vanne 20.

L'actionneur 19 comporte en outre une gorge annulaire formant une deuxième chambre 44 ménagée sur le premier côté 27 du boîtier 25 pour permettre le déplacement du doigt de poussé 43.

On notera que l'actionneur 19 et la vanne 20 sont agencés l'un par rapport à l'autre de sorte que la deuxième chambre annulaire 44 se trouve en regard de la première chambre annulaire 45 du corps 21 de vanne 20, avec le joint d'étanchéité 42 qui est situé à l'interface entre les première et deuxième chambres 45 et 44.

L'assemblage de la vanne de régulation 20 est illustré en particulier sur les figures 16 à 18.

Le joint 73 est monté dans le logement 90 entre la tête 72 et la base 71 du premier bouchon d'obturation 68. La base 71 est introduite et vissée dans le premier puits 67 du côté de la première extrémité 65 du tiroir 40.

Le joint 77 est monté dans le logement 91 entre la tête 76 et la base 75 du deuxième bouchon d'obturation 70. La tige réductrice, ici présentant un diamètre environ égale à 2,6 mm, est introduite au travers du trou traversant 78 ménagé dans le deuxième bouchon d'obturation 70. La base 75 est introduite et vissée dans le deuxième puits 69 du côté de la deuxième extrémité 64 du tiroir 40.

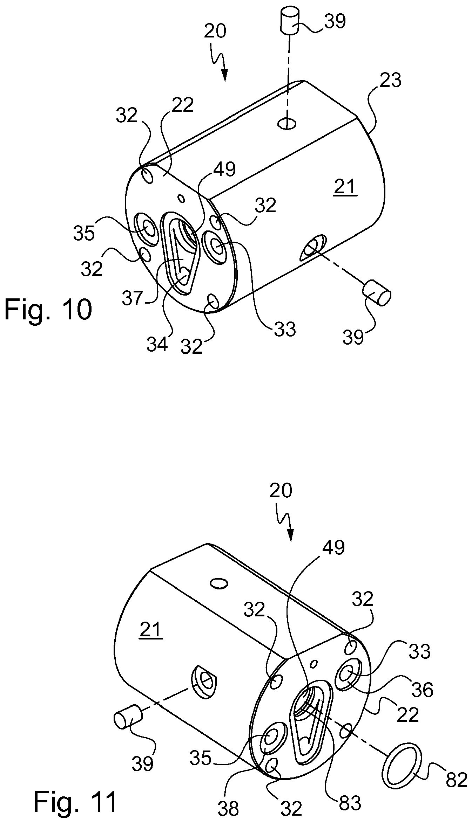

Le joint 82 est introduit dans la gorge 83 ménagée dans le corps 21 de vanne 20 par son premier côté 22 (voir figure 11).

Le tiroir 40, qui a ici un diamètre externe environ égale à 12 mm, est introduit dans la cavité principale 49 du corps 21 de vanne 20, en entrant par une ouverture formée sur le deuxième côté 23 du corps.

Le ressort 88 est monté, par le premier côté 22 du corps 21, sur la tige réductrice 80 et logé partiellement dans le logement 87 ménagé dans la base 76 du deuxième bouchon d'obturation 70, à l'opposé de sa tête 75.

La chemise d'amortissement 81 est montée, par le premier côté 22 du corps 21, dans la cavité principale 49 et sensiblement autour de la tige réductrice 80 et du ressort 88 jusqu'à ce que sa paroi de fond 85 vienne en appui sur l'extrémité de la tige réductrice 80. La chemise d'amortissement 81 est maintenue en place dans la cavité principale 49 par l'action du joint 82.

Le pion de détrompage 24 est monté sur le premier côté 22 du corps 21.

Les joints toriques 46 et 48 sont logés dans les gorges d'étanchéité respectives 38 et 36 formées autour des ouvertures 35 et 33 respectivement de régulation et d'alimentation ; et le joint torique 47 est logé autour de la chambre d'étanchéité 37 formée autour de l'ouverture de vidange 34.

La vanne de régulation est ainsi assemblée et l'actionneur 19 est monté sur le deuxième côté 23 du corps 21 de vanne 20, avec la deuxième chambre annulaire 44 du boîtier 25 de l'actionneur 19 qui vient en regard de la première chambre annulaire 45 du corps 21 de vanne 20, le joint d'étanchéité 42 qui est pris en sandwich entre le corps 21 et le boîtier 25 à l'interface entre les première et deuxième chambres 45 et 44, et le doigt de poussée 43 qui est reçu dans la cavité externe 74 du premier bouchon d'obturation 68.

La vanne 20 et l'actionneur 19 sont ainsi assemblés et sont montés sur la centrale 18 par le premier côté 22 du corps 21 de vanne 20.

Les vis de fixation 30 sont installées dans les alésages passant au travers du boîtier 25 de l'actionneur 19 et du corps 21 de vanne 20 et assujetties mécaniquement à la centrale 18 pour former un dispositif de régulation 2 assemblé et monté dans le système 1 montré sur la figure 1.

L'agencement décrit ci-dessus permet au tiroir 40 d'être monté mobile dans la cavité principale 49 du corps 21, entre une position d'alimentation où les encoches d'alimentation 61 sont en regard de la gorge d'alimentation 50 du corps 20, et une position de vidange où les encoches encoche de vidange 63 sont en regard de la gorge de vidange 52 du corps 20.

On notera que le tiroir 40 est déplacé avec les premier et deuxième bouchons d'obturation 68 et 76; tandis qu'il est mobile par rapport au mécanisme d'amortissement 79, formé de la tige réductrice 80, du ressort 88 et de la chemise 81.

Au surplus, l'agencement décrit ci-dessus permet de fournir un dispositif de régulation 2 configuré pour admettre une configuration de régulation sensiblement stable, dans laquelle la valeur de pression du fluide hydraulique cheminant entre la vanne 20 et la chambre de pression 17 délimitée par le piston 14 et le corps 12 de l'étrier de frein 7, est contrôlée à la valeur prédéterminée.

Dans cette configuration, le tiroir 40 est positionné dans la cavité principale 49 du corps 20 de sorte que les encoches de régulation 63 sont en regard de la gorge de régulation 52 du corps 20 ; tandis que les encoches d'alimentation et de vidange 61 et 62 sont à distance (et donc pas en regard) respectivement des gorges d'alimentation et de vidange 50 et 51 du corps.

Ainsi qu'expliqué plus haut, dans le système de freinage 1, le fluide hydraulique circule dans la chambre interne 60 et dans les encoches 61, 62 et 63 du tiroir 40 de la vanne 20 et aussi dans les gorges 50, 51 et 52 du corps 21 de la vanne 20.

La combinaison d'un tel agencement avec, d'une part, des encoches d'alimentation 61 et de vidange 62 dont la section globale de passage du fluide est triangulaire et, d'autre part, des encoches d'alimentation 61 et de vidange 62 qui sont fermées (c'est-à-dire qui ne sont pas en regard respectivement des gorges d'alimentation et de vidange 50 et 51) lorsque les encoches de régulation 63 sont ouvertes (c'est-à-dire en regard de la gorge de régulation 52), permet à la fois de limiter substantiellement les éventuelles fuites du fluide hydraulique dans la vanne de régulation 20 et de fournir une régulation particulièrement précise, au regard d'une valeur limite prédéterminée de pression du fluide hydraulique.

On notera que la précision de la régulation peut se définir et s'apprécier notamment par un temps de réponse satisfaisant de la vanne 20 au regard de l'application au système de freinage ferroviaire 1, et en particulier par une stabilité de la régulation sur toute la plage de pression utile, c'est-à-dire depuis zéro (non inclus) jusqu'à la valeur limite prédéterminée.

Cela permet d'offrir l'avantage de conserver plus longtemps une pression de fluide hydraulique comprise entre environ 110 bars et environ 145 bars dans l'accumulateur 3 et donc de moins solliciter le groupe motopompe.

On notera aussi qu'une telle stabilité est particulièrement avantageuse pour faire fonctionner par exemple une fonction d'anti-patinage des roues du véhicule ferroviaire.

Plus précisément, dans l'exemple de réalisation décrit ci-dessus du système de freinage 1 et en particulier de l'étrier de frein de service 7, lorsque le véhicule nécessite d'être freiné ou arrêté, le frein de service est appliqué via l'organe ressort 15.

Dans ce cas, il peut être requis de diminuer la pression dans la chambre de pression 17 voire de la vidanger du fluide hydraulique (pression nulle).

L'actionneur 19 reçoit une consigne de commande déterminée et le doigt de poussée 43 déplace le tiroir 40 dans le corps 21 de sorte que les encoches de vidange 62 se retrouvent en regard de la gorge de vidange 51.

Le fluide hydraulique chemine depuis l'étrier 7 par la conduite 8, entre dans la vanne 20 par son ouverture de régulation 35, chemine dans le conduit de régulation 55, dans la gorge de régulation 52, dans les encoches de régulation 63, dans la chambre interne 60, puis dans les encoches de vidange 62, dans la gorge de vidange 51, dans le conduit de vidange 54 jusqu'à déboucher dans la chambre d'étanchéité 37 au niveau de l'ouverture de vidange 34 avant de s'écouler jusqu'à la cuve de récupération 5 via la conduite 6.

On notera que la forme en triangle des encoches de vidange 62 permet de faire baisser la pression du fluide d'une manière assez linéaire et donc stable. En particulier, la communication fluidique entre les encoches 62 et la gorge 51 se fait grâce à une section de passage évolutive.

Lorsque la pression de fluide hydraulique est atteinte dans l'étrier 7, l'actionneur déplace le tiroir dans sa configuration sensiblement stable dans laquelle les encoches de régulation 63 sont en regard de la gorge de régulation 52 du corps 20 ; tandis que les encoches d'alimentation et de vidange 61 et 62 sont à distance (et donc pas en regard) respectivement des gorges d'alimentation et de vidange 50 et 51 du corps.

Au contraire, dans l'exemple de réalisation décrit ci-dessus du système de freinage 1 et en particulier de l'étrier de frein de service 7, lorsque le véhicule nécessite d'être accéléré après un freinage, l'organe ressort 15 nécessite d'être désappliqué.

Dans ce cas, il peut être requis d'augmenter la pression dans la chambre de pression 17.

L'actionneur 19 reçoit une consigne de commande déterminée et le doigt de poussée 43 déplace le tiroir 40 dans le corps 21 de sorte que les encoches d'alimentation 61 se retrouvent en regard de la gorge d'alimentation 50.

Le fluide hydraulique chemine depuis la source 3 via la conduite 4, entre dans la vanne 20 par l'ouverture d'alimentation 33, chemine dans le conduit d'alimentation 53, dans la gorge d'alimentation 50, dans les encoches d'alimentation 61, dans la chambre interne 60, puis dans les encoches de régulation 63, dans la gorge de régulation 52, dans le conduit de régulation 55 jusqu'à déboucher par l'ouverture de régulation 35 avant d'alimenter la chambre de pression 17 de l'étrier 7 via la conduite 8.

Comme ci-dessus, on notera que la forme en triangle des encoches d'alimentation 61 permet de faire monter la pression du fluide d'une manière assez linéaire et donc stable. En particulier, la communication fluidique entre les encoches 61 et la gorge 52 se fait grâce à une section de passage évolutive.

Lorsque la pression de fluide hydraulique est atteinte dans l'étrier 7, l'actionneur déplace le tiroir dans sa configuration sensiblement stable dans laquelle les encoches de régulation 63 sont en regard de la gorge de régulation 52 du corps 20 ; tandis que les encoches d'alimentation et de vidange 61 et 62 sont à distance (et donc pas en regard) respectivement des gorges d'alimentation et de vidange 50 et 51 du corps.

Dans une variante non illustrée, l'étrier de frein peut fonctionner de manière inversée par rapport à la description faite ci-dessus. En particulier, le frein peut être appliqué par l'action du piston via le remplissage de la chambre de pression en fluide pressurisé à sa valeur limite prédéterminée de pression ; tandis que le frein peut être désappliqué par l'action de l'organe de ressort et donc en baissant la pression du fluide dans la chambre de pression. Le dispositif de régulation est adapté à être utilisé selon un tel fonctionnement du dispositif de freinage.

Dans d'autres variantes non illustrées, les encoches d'alimentation et/ou les encoches de vidange ne sont pas formées par un orifice unique en forme de triangle mais plutôt par une pluralité d'orifices triangulaires, ou circulaires, ou encore rectangulaires, dès lors que la section globale de passage qu'ils délimitent présente au moins un sommet tel que décrit plus haut.

Les encoches de régulation peuvent aussi présenter une section globale de passage ayant une forme présentant sensiblement au moins un sommet.

Dans encore d'autres variantes non illustrées :
- le tiroir est pourvu de plus ou moins d'encoches d'alimentation et/ de régulation et/ou de vidange ;
- le tiroir est dépourvu de mécanisme d'amortissement, mais comporte plutôt un bouchon d'obturation sans trou traversant ;
- le tiroir est dépourvu de rainure annulaire ;
- le corps de vanne est dépourvu de gorge latérale formant une chambre annulaire, seul l'actionneur présentant une telle chambre ; ou inversement l'actionneur est dépourvu d'une telle chambre, seul le corps de vanne étant pourvu d'une gorge latérale formant une chambre annulaire ;
- les ouvertures et conduits d'alimentation, de vidange et de régulation présentent un agencement différent de celui décrit ci-dessus ; par exemple, les ouvertures débouchent partiellement ou totalement sur le pourtour du corps plutôt que le premier côté du corps ;
- le tiroir et la cavité principale du corps de vanne ne sont pas cylindriques mais plutôt rectangulaires ou hexagonales ;
- l'actionneur n'est pas électrique mais plutôt mécanique, ou hydraulique ou encore pneumatique ; et/ou
- le fluide n'est pas hydraulique mais plutôt gazeux.

## Revendications

1. Dispositif de régulation d'un agent de pression configuré pour contrôler à une valeur prédéterminée la valeur de pression dudit agent de pression, comportant une vanne de régulation (20) pourvue d'un corps (21) ayant une cavité principale longitudinale (49) et, débouchant dans ladite cavité principale, une gorge d'alimentation (50) , une gorge de vidange (51) et une gorge de régulation (52) située entre lesdites gorges d'alimentation et de vidange ; **caractérisé en ce que** la vanne est en outre pourvue d'un tiroir (40) ayant une chambre interne (60) et, débouchant dans ladite chambre interne, au moins une encoche d'alimentation (61), au moins une encoche de vidange (62) et au moins une encoche de régulation (63) située entre lesdites encoches d'alimentation et de vidange ;
lesdites encoches d'alimentation et de vidange dudit tiroir présentant chacun une section globale de passage dudit agent de pression ayant une forme présentant sensiblement au moins un sommet ;
ledit tiroir étant monté mobile dans ladite cavité principale dudit corps, entre une position d'alimentation où ladite au moins une encoche d'alimentation est en regard de ladite gorge d'alimentation dudit corps, et une position de vidange où ladite au moins une encoche de vidange est en regard de ladite gorge de vidange dudit corps ;
ledit dispositif de régulation étant configuré pour admettre une configuration de régulation sensiblement stable, dans laquelle ladite valeur de pression dudit agent de pression est limitée à ladite valeur prédéterminée, et dans laquelle ledit tiroir est positionné dans ladite cavité principale dudit corps de sorte que ladite au moins une encoche de régulation est en regard de ladite gorge de régulation dudit corps tandis que lesdites encoches d'alimentation et de vidange sont à distances respectivement desdites gorges d'alimentation et de vidange dudit corps.

2. Dispositif de régulation d'un agent de pression selon la revendication 1, **caractérisé en ce que** ledit tiroir (40) s'étend globalement longitudinalement et présente, à une première extrémité (65), un premier puits (67) rejoignant ladite chambre interne, ainsi qu'un premier bouchon d'obturation (68) assujetti mécaniquement et de manière étanche dans ledit premier puits, avec ledit premier bouchon d'obturation qui comporte une cavité externe (74) ménagée à l'opposé dudit premier puits et configurée pour recevoir un doigt de poussée (43) prévu pour déplacer ledit tiroir dans ladite cavité principale dudit corps ; et à une deuxième extrémité (64), un deuxième puits (69) rejoignant ladite chambre interne, ainsi qu'un deuxième bouchon d'obturation (70) assujetti mécaniquement et de manière étanche dans ledit deuxième puits, avec ledit deuxième bouchon d'obturation qui comporte un trou (78) ménagé à l'opposé dudit deuxième puits et qui est configuré pour coopérer avec un mécanisme d'amortissement (79) dudit tiroir, monté dans ladite cavité principale dudit corps, lequel mécanisme d'amortissement comporte une tige réductrice (80) au moins partiellement introduite dans ledit trou, une chemise d'amortissement (81) en appui contre ladite tige réductrice et un organe élastique de rappel (88) interposé entre ladite chemise d'amortissement et ledit deuxième bouchon d'obturation.

3. Système de freinage ferroviaire pour véhicule ferroviaire à organes de freinage à au moins une garniture ou à au moins une semelle (13), comportant un dispositif de freinage (7) pourvu d'un cylindre (12) et d'un piston (14) mobile par rapport audit cylindre pour agir sur lesdits organes de freinage, une source (3) d'agent de pression configurée pour alimenter ledit dispositif de freinage en agent de pression et mettre en mouvement ledit piston, et un dispositif de régulation (2) selon la revendication 1 disposé entre ladite source et ledit dispositif de freinage et configuré pour contrôler à une valeur prédéterminée la valeur de pression dudit agent de pression cheminant entre ledit dispositif de régulation et ledit dispositif de freinage.

4. Système selon la revendication 3, **caractérisé en ce que** ledit tiroir (40) présente une forme globalement cylindrique et est pourvu de deux dites encoches d'alimentation débouchant en regard l'une de l'autre, de deux dites encoches de vidange débouchant en regard l'une de l'autre et d'au moins deux dites encoches de régulation débouchant en regard l'une de l'autre ; avec au moins lesdites encoches d'alimentation et/ou lesdites encoches de vidange qui présentent une section de passage sensiblement triangulaire.

5. Système selon l'une des revendications 3 et 4, **caractérisé en ce que** ledit tiroir (40) s'étend globalement longitudinalement et présente, à une première extrémité (65), un premier puits (67) rejoignant ladite chambre interne (60), ainsi qu'un premier bouchon d'obturation (68) assujetti mécaniquement et de manière étanche dans ledit premier puits.

6. Système selon la revendication 5, **caractérisé en ce que** ledit premier bouchon d'obturation (68) comporte une cavité externe (74) ménagée à l'opposé dudit premier puits (67) et configurée pour recevoir un doigt de poussée (43) prévu pour déplacer ledit tiroir (40) dans ladite cavité principale (49) dudit corps (21).

7. Système selon l'une quelconque des revendications 3 à 6, **caractérisé en ce que** ledit tiroir (40) s'étend globalement longitudinalement et présente, à une deuxième extrémité (64), un deuxième puits (69) rejoignant ladite chambre interne (60), ainsi qu'un deuxième bouchon d'obturation (70) assujetti mécaniquement et de manière étanche dans ledit deuxième puits.

8. Système selon la revendication 7, **caractérisé en ce que** ledit deuxième bouchon d'obturation (70) est configuré pour coopérer avec un mécanisme d'amortissement (79) dudit tiroir (40), monté dans ladite cavité principale (49) dudit corps (21).

9. Système selon la revendication 8, **caractérisé en ce que** ledit deuxième bouchon d'obturation (70) comporte un trou (78) ménagé à l'opposé dudit deuxième puits (69) et ledit mécanisme d'amortissement (79) comporte une tige réductrice (80) au moins partiellement introduite dans ledit trou, une chemise d'amortissement (81) en appui contre ladite tige réductrice et un organe élastique de rappel (88) interposé entre ladite chemise d'amortissement et ledit deuxième bouchon d'obturation.

10. Système selon l'une quelconque des revendications 3 à 9, **caractérisé en ce que** ladite cavité principale longitudinale (49) ménagée dans ledit corps (21) de ladite vanne de régulation (20) débouche de part et d'autre dudit corps.

11. Système selon l'une quelconque des revendications 3 à 10, **caractérisé en ce que** ledit corps (21) de ladite vanne de régulation (20) est pourvu d'un conduit d'alimentation (53) débouchant sur un premier côté (22) dudit corps et dans ladite gorge d'alimentation (50), d'un conduit de vidange (54) débouchant sur ledit premier côté dudit corps et dans ladite gorge de vidange (51), et d'un conduit de régulation (55) débouchant sur ledit premier côté dudit corps et dans ladite gorge de régulation (52).

12. Système selon l'une quelconque des revendications 3 à 11, **caractérisé en ce que** ledit dispositif de régulation (2) comporte une centrale (18) formant une interface fluidique entre ladite vanne de régulation (20), ledit dispositif de freinage (7) et ladite source (3) d'agent de pression ; ledit corps (21) de ladite vanne de régulation présente un premier côté (22) par lequel est montée ladite vanne de régulation sur ladite centrale et plusieurs ouvertures (34, 35, 36) sont formées sur ledit premier côté pour permettre une communication fluidique entre ladite vanne de régulation et ladite centrale.

13. Système selon l'une quelconque des revendications 3 à 12, **caractérisé en ce que** ledit dispositif de régulation (2) comporte un actionneur (19) configuré pour déplacer ledit tiroir (40) dans ladite cavité principale (49) dudit corps en fonction d'une consigne de commande ; ledit corps de ladite vanne de régulation (20) présente un deuxième côté (23) par lequel est montée ladite vanne de régulation sur ledit actionneur et au moins une ouverture est formée sur ledit deuxième côté pour permettre le déplacement dudit tiroir dans ladite cavité principale dudit corps.

14. Système selon l'une quelconque des revendications 3 à 13, **caractérisé en ce que** ledit dispositif de régulation (2) comporte un actionneur électrique linéaire à bobine mobile, configuré pour recevoir une consigne électrique de commande et pourvu d'un doigt de poussée (43) venant au contact dudit tiroir (40) pour le déplacement de ce dernier dans ladite cavité principale (49) dudit corps (21).

15. Système selon l'une quelconque des revendications 3 à 14, **caractérisé en ce que** ledit agent de pression est un fluide hydraulique.

## Patentansprüche

1. Steuervorrichtung eines Druckmittels, die zum Steuern des Druckwerts des Druckmittels auf einen vorbestimmten Wert konfiguriert ist, ein Steuerventil (20) beinhaltend, das mit einem Gehäuse (21) versehen ist, das einen länglichen Haupthohlraum (49) aufweist, und in den Haupthohlraum einmündend, eine Versorgungsrille (50), eine Ablassrille (51) und eine Steuerrille (52), die sich zwischen der Versorgungs- und der Ablassrille befindet; **dadurch gekennzeichnet, dass** das Ventil weiter mit einem Schieber (40) versehen ist, der eine interne Kammer (60) aufweist, und, in die interne Kammer einmündend, mindestens eine Versorgungseinkerbung (61), mindestens eine Ablasseinkerbung (62) und mindestens eine Steuereinkerbung (63), die sich zwischen der Versorgungs- und der Ablasseinkerbung befindet;
wobei die Versorgungs- und die Ablasseinkerbung des Schiebers jeweils einen allgemeinen Durchgangsquerschnitt für das Druckmittel aufweisen, der eine Form aufweist, die im Wesentlichen mindestens eine Spitze aufweist;
wobei der Schieber in dem Haupthohlraum des Gehäuses zwischen einer Versorgungsstellung, in der sich die mindestens eine Versorgungseinkerbung auf Höhe der Versorgungsrille des Gehäuses befindet, und einer Ablassstellung beweglich montiert ist, in der sich die mindestens eine Ablasseinkerbung auf Höhe der Ablassrille des Gehäuses befindet;
wobei die Steuervorrichtung konfiguriert ist, um eine im Wesentlichen stabile Steuerkonfiguration anzunehmen, bei der der Druckwert des Druckmittels auf den vorbestimmten Wert begrenzt ist, und bei der der Schieber in dem Haupthohlraum des Gehäuses derart positioniert ist, das sich die mindestens eine Steuereinkerbung auf Höhe der Steuerrille des Gehäuses befindet, während sich die Versorgungs- und die Ablasseinkerbung auf Abstand jeweils zu der Versorgungs- und der Ablassrille des Gehäuses befinden.

2. Steuervorrichtung eines Druckmittels nach Anspruch 1, **dadurch gekennzeichnet, dass** sich der Schieber (40) im Allgemeinen längsgerichtet erstreckt und an einem ersten Ende (65) einen ersten Schacht (67) aufweist, der sich der internen Kammer anschließt, sowie einen ersten Verschlussstopfen (68), der mechanisch und in dichter Form in dem ersten Schacht festgemacht ist, wobei der erste Verschlussstopfen einen externen Hohlraum (74) beinhaltet, der gegenüber dem ersten Schacht eingearbeitet ist, und konfiguriert ist, um einen Schubstift (43) aufzunehmen, der vorgesehen ist, um den Schieber in dem Haupthohlraum des Gehäuses zu verschieben; und an einem zweiten Ende (64) einen zweiten Schacht (69), der sich der zweiten Kammer anschließt, sowie einen zweiten Verschlussstopfen (70), der mechanisch und in dichter Form in dem zweiten Schacht festgemacht ist, wobei der zweite Verschlussstopfen ein Loch (78) beinhaltet, das gegenüber dem zweiten Schacht eingearbeitet ist und konfiguriert ist, um mit einem Dämpfungsmechanismus (79) des Schiebers zusammenzuwirken, der in dem Haupthohlraum des Gehäuses montiert ist, wobei der Dämpfungsmechanismus einen Reduzierstift (80), der mindestens teilweise in das Loch eingeführt ist, eine Dämpfungslaufbuchse (81), die an dem Reduzierstift anliegt, und ein elastisches Rückstellorgan (88), das zwischen der Dämpfungslaufbuchse und dem zweiten Verschlussstopfen eingesetzt ist, beinhaltet.

3. Schienenbremssystem für ein Schienenfahrzeug mit Bremsorganen mit mindestens einem Belag oder mindestens einer Sohle (13), eine Bremsvorrichtung (7) beinhaltend, die mit einem Zylinder (12) und einem Kolben (14) versehen ist, der in Bezug auf den Zylinder beweglich ist, um auf die Bremsorgane einzuwirken, eine Quelle (3) für ein Druckmittel, die konfiguriert ist um die Bremsvorrichtung mit einem Druckmittel zu versorgen, und den Kolben in Bewegung zu versetzen, und eine Steuervorrichtung (2) nach Anspruch 1, die zwischen der Quelle und der Bremsvorrichtung angeordnet ist und konfiguriert ist, um den Druckwert des Druckmittels, das zwischen der Steuervorrichtung und der Bremsvorrichtung verläuft, auf einen vorbestimmten Wert zu steuern.

4. System nach Anspruch 3, **dadurch gekennzeichnet, dass** der Schieber (40) eine im Allgemeinen zylindrische Form aufweist und mit zwei Versorgungseinkerbungen versehen ist, die auf Höhe zueinander einmünden, mit zwei Ablasseinkerbungen, die auf Höhe zueinander einmünden, und mit mindestens zwei Steuereinkerbungen, die auf Höhe zueinander einmünden; wobei mindestens die Versorgungs- und/oder die Ablasseinkerbungen einen im Wesentlichen dreieckigen Durchgangsquerschnitt aufweisen.

5. System nach einem der Ansprüche 3 und 4, **dadurch gekennzeichnet, dass** sich der Schieber (40) im Allgemeinen längs erstreckt und an einem ersten Ende (65) einen ersten Schacht (67) aufweist, der sich der internen Kammer (60) anschließt, sowie einen ersten Verschlussstopfen (68), der mechanisch und in dichter Form in dem ersten Schacht festgemacht ist.

6. System nach Anspruch 5, **dadurch gekennzeichnet, dass** der erste Verschlussstopfen (68) einen externen Hohlraum (74) beinhaltet, der gegenüber dem ersten Schacht (67) eingearbeitet ist, und konfiguriert ist, um einen Schubstift (43) aufzunehmen, der vorgesehen ist, um den Schieber (40) in dem Haupthohlraum (49) des Gehäuses (21) zu verschieben.

7. System nach einem der Ansprüche 3 bis 6, **dadurch gekennzeichnet, dass** sich der Schieber (40) im Allgemeinen längs erstreckt und an einem zweiten Ende (64) einen zweiten Schacht (69) aufweist, der sich der internen Kammer (60) anschließt, sowie einen zweiten Verschlussstopfen (70), der mechanisch und in dichter Form in dem zweiten Schacht festgemacht ist.

8. System nach Anspruch 7, **dadurch gekennzeichnet, dass** der zweite Verschlussstopfen (70) konfiguriert ist, um mit einem Dämpfungsmechanismus (79) des Schiebers (40) zusammenzuwirken, der in dem Haupthohlraum (49) des Gehäuses (21) montiert ist.

9. System nach Anspruch 8, **dadurch gekennzeichnet, dass** der zweite Verschlussstopfen (70) ein Loch (78) beinhaltet, das gegenüber dem zweiten Schacht (69) eingearbeitet ist, und der Dämpfungsmechanismus (79) einen Reduzierstift (80), der mindestens teilweise in das Loch eingeführt ist, eine Dämpfungslaufbuchse (81), die an dem Reduzierstift anliegt, und ein elastisches Rückstellorgan (88), das zwischen der Dämpfungslaufbuchse und dem zweiten Verschlussstopfen eingesetzt ist, beinhaltet.

10. System nach einem der Ansprüche 3 bis 9, **dadurch gekennzeichnet, dass** der Längshohlraum (49), der in dem Gehäuse (21) des Steuerventils (20) eingearbeitet ist, beiderseits des Gehäuses einmündet.

11. System nach einem der Ansprüche 3 bis 10, **dadurch gekennzeichnet, dass** das Gehäuse (21) des Steuerventils (20) mit einer Versorgungsleitung (53) versehen ist, die auf einer ersten Seite (22) des Gehäuses und in die Versorgungsrille (50) einmündet, mit einer Ablassleitung (54), die auf der ersten Seite des Gehäuses und in die Ablassrille (51) einmündet, und mit einer Steuerleitung (55), die auf der ersten Seite des Gehäuses und in die Steuerrille (52) einmündet.

12. System nach einem der Ansprüche 3 bis 11, **dadurch gekennzeichnet, dass** die Steuervorrichtung (2) eine Zentrale (18) beinhaltet, die eine Fluidschnittstelle zwischen dem Steuerventil (20), der Bremsvorrichtung (7) und der Quelle (3) für das Druckmittel bildet; wobei das Gehäuse (21) des Steuerventils eine erste Seite (22) aufweist, durch die das Steuerventil auf der Zentrale montiert ist, und mehrere Öffnungen (34, 35, 36) auf der ersten Seite gebildet werden, um eine Fluidverbindung zwischen dem Steuerventil und der Zentrale zu ermöglichen.

13. System nach einem der Ansprüche 3 bis 12, **dadurch gekennzeichnet, dass** die Steuervorrichtung (2) einen Stellantrieb (19) beinhaltet, der konfiguriert ist, um den Schieber (40) in dem Haupthohlraum (49) des Gehäuses in Abhängigkeit von einer Steuervorgabe zu verschieben; wobei das Gehäuse des Steuerventils (20) eine zweite Seite (23) aufweist, durch die das Steuerventil auf dem Stellantrieb montiert ist, und mindestens eine Öffnung auf der zweiten Seite gebildet wird, um das Verschieben des Schiebers in dem Haupthohlraum des Gehäuses zu ermöglichen.

14. System nach einem der Ansprüche 3 bis 13, **dadurch gekennzeichnet, dass** die Steuervorrichtung (2) einen elektrischen Linearstellantrieb mit beweglicher Spule beinhaltet, der konfiguriert ist, um eine elektrische Befehlsvorgabe zu empfangen, und mit einem Schubstift (43) versehen ist, der in Kontakt mit dem Schieber (40) zum Verschieben des letzteren in dem Haupthohlraum (49) des Gehäuses (21) kommt.

15. System nach einem der Ansprüche 3 bis 14, **dadurch gekennzeichnet, dass** das Druckmittel ein Hydraulikfluid ist.

## Claims

1. Device for regulating a pressure agent configured to control at a predetermined value the pressure value of said pressure agent, including a regulation valve (20) provided with a body (21) having a longitudinal main cavity (49) and, opening into said main cavity, a supply groove (50), a drainage groove (51) and a regulation groove (52) located between said supply and drainage grooves; **characterised in that** the valve is further provided with a slide (40) having an inner chamber (60) and, opening into said inner chamber, at least one supply notch (61), at least one drainage notch (62) and at least one regulation notch (63) located between said supply and drainage notches,
said supply and drainage notches of said slide each having an overall passage cross-section of said pressure agent having a shape having substantially at least one apex;
said slide being movably mounted in said main cavity of said body, between a supply position in which said at least one supply notch is facing said supply groove of said body, and a drainage position in which said at least one drainage notch is facing said drainage groove of said body;
said regulation device being configured to allow a substantially stable regulation configuration, wherein said pressure value of said pressure agent is limited to said predetermined value, and wherein said slide is positioned in said main cavity of said body such that said at least one regulation notch of said slide is facing said regulation groove of said body while said supply and drainage notches are respectively at a distance from said supply and drainage grooves.

2. Device for regulating a pressure agent according to claim 1, **characterised in that** said slide (40) extends overall longitudinally and has, at a first end (65), a first shaft (67) joining said inner chamber, as well as a first sealing plug (68) fixed mechanically and tightly in said first shaft, with said sealing plug which includes an outer cavity (74) arranged opposite said first shaft and configured to receive a thrust finger (43) provided to move said slide in said main cavity of said body; and at a second end (64), a second shaft (69) joining said inner chamber, as well as a second sealing plug (70) fixed mechanically and tightly in said second shaft, with said sealing plug which includes a hole (78) arranged opposite said second shaft and which is configured to cooperate with a damping mechanism (79) of said slide, mounted in said main cavity of said body, said damping mechanism including a reducing rod (80) at least partially inserted into said hole, a damping jacket (81) pressing against said reducing rod and an elastic return member (88) inserted between said damping jacket and said second sealing plug.

3. Railway braking system for a rail car having braking members having at least one packing material or at least one tie pad (13), including a braking device (7) provided with a cylinder (12) and a piston (14) that is movable in relation to said cylinder to act upon said braking members, a source (3) of pressure agent configured to supply said braking device with pressure agent and set said piston in motion, and a regulation device (2) according to claim 1 disposed between said source and said braking device and configured to control at a predetermined value the pressure value of said pressure agent travelling between said regulation device and said braking device.

4. System according to claim 3, **characterised in that** said slide (40) has an overall cylindrical shape and is provided with two said supply notches opening facing one another, two said drainage notches opening facing one another and at least two said regulation notches facing one another; with at least two said supply notches and/or said drainage notches which have a substantially triangular passage cross-section.

5. System according to one of claims 3 and 4, **characterised in that** said slide (40) extends overall longitudinally and has, at a first end (65), a first shaft (67) joining said inner chamber (60), as well as a first sealing plug (68) fixed mechanically and tightly in said first shaft.

6. System according to claim 5, **characterised in that** said sealing plug (68) includes an outer cavity (74) arranged opposite said first shaft (67) and configured to receive a thrust finger (43) provided to move said slide (40) in said main cavity (49) of said body (21).

7. System according to any one of claims 3 to 6, **characterised in that** said slide (40) extends overall longitudinally and has, at a first end (64), a second shaft (69) joining said inner chamber (60), as well as a second sealing plug (70) fixed mechanically and tightly in said second shaft.

8. System according to claim 7, **characterised in that** said second sealing plug (70) is configured to cooperate with a damping mechanism (79) of said slide (40), mounted in said main cavity (49) of said body (21).

9. System according to claim 8, **characterised in that** said second sealing plug (70) includes a hole (78) arranged opposite said second shaft (69) and said damping mechanism (79) includes a reducing rod (80) at least partially inserted into said hole, a damping jacket (81) pressing against said reducing rod and an elastic return member (88) inserted between said damping jacket and said second sealing plug.

10. System according to any one of claims 3 to 9, **characterised in that** said longitudinal main cavity (49) arranged in said body (21) of said regulation valve (20) opens at either side of said body.

11. System according to any one of claims 3 to 10, **characterised in that** said body (21) of said regulation valve (20) is provided with a supply conduit (53) opening onto a first side (22) of said body and into said supply groove (50), with a drainage conduit (54) opening onto said first side of said body and into said drainage groove (51), and with a regulation conduit (55) opening on said first side of said body and into said regulation groove (52).

12. System according to any one of claims 3 to 11, **characterised in that** said regulation device (2) includes a unit (18) forming a fluidic interface between said regulation valve (20), said braking device (7) and said source (3) of pressure agent; said body (21) of said regulation valve has a first side (22) whereby said regulation valve is mounted on said unit and several openings (34, 35, 36) are formed on said first side to enable a fluidic communication between said regulation valve and said unit.

13. System according to any one of claims 3 to 12, **characterised in that** said regulation device (2) includes an actuator (19) configured to move said slide (40) in said main cavity (49) of said body according to a control instruction; said body of said regulation valve (20) has a second side (23) whereby said regulation valve is mounted on said actuator and at least one opening is formed on said second side to enable the movement of said slide in said main cavity of said body.

14. System according to any one of claims 3 to 13, **characterised in that** said regulation device (2) includes a mobile coil linear electrical actuator, configured to receive an electrical control instruction and provided with a thrust finger (43) coming into contact with said slide (40) for moving the latter in said main cavity (49) of said body (21).

15. System according to any one of claims 3 to 14, **characterised in that** said pressure agent is a hydraulic fluid.
